# EUROPEAN PATENT SPECIFICATION

(11) **EP 3 223 501 B1**
(45) Date of publication and mention of the grant of the patent: **07.07.2021**
(21) Application number: 17156800.9
(22) Date of filing: 20.02.2017
(51) Int. Cl.: H04M 1/725, G06F 15/02, H04W 4/50, H04W 76/14, H04M 1/72412, H04M 1/72451, H04M 1/72463

(54) **SYSTEM AND METHOD FOR CHECKING THE SETTING OF A FUNCTION RESTRICTION MODE IN AN ELECTRONIC DEVICE**
SYSTEM UND VERFAHREN ZUR ÜBERPRÜFUNG DER EINSTELLUNG EINES FUNKTIONSBESCHRÄNKUNGSMODUS IN EINEM ELEKTRONISCHEN GERÄT
SYSTÈME ET MÉTHODE POUR VÉRIFIER LE RÉGLAGE D'UN MODE DE RESTRICTION DE FONCTION DANS UN DISPOSITIF ÉLECTRONIQUE

(30) Priority: 24.03.2016 JP 2016060116
(43) Date of publication of application: 27.09.2017
(73) Proprietor: Casio Computer Co., Ltd., Tokyo 151-8543 (JP)
(72) Inventor: IWASAKI, Shoichi, Hamura-shi, Tokyo 205-8555 (JP)
(74) Representative: Grünecker Patent- und Rechtsanwälte PartG mbB

(56) References cited:
- EP-A1- 2 677 668
- US-A1- 2008 154 997
- US-A1- 2013 290 389
- US-A1- 2014 026 128
- US-A1- 2014 068 236
- US-A1- 2014 337 990
- US-A1- 2014 361 995

## Description

### Background of the Invention

### 1. Field of the Invention

The present invention relates to an electronic device, a communication device, a control method, and a storage medium.

### escription of the related art

An electronic device (an electronic calculator) of the related art can prohibit use of calculation functions and display information representing a function restriction state in which use of the calculation functions is prohibited, if an examination mode is set (see JP-B-4134416, for instance). As the information representing the function restriction state, a symbol or the like can be displayed in a function display area provided at a lower portion of a display screen. In this case, a user of the electronic calculator can see the information on the function restriction state displayed on the display screen, thereby recognizing that use of the calculation functions is prohibited.

Document US2014/0337990A1 is directed at a method for using a multi-function computer for testing. The examinees present a staging image to the proctor to verify that each mobile device is configured correctly for the examination in question.

Document US2014/0068236A1 is directed to a custom configuration for a calculator based on a selected functionality. An administrator monitors a custom configuration from a remote location to the calculator, such as the front of a classroom to verify the calculator is operating in the examination mode with restricted functionality. The calculator operates as slave device.

Document US2008/0154997A1 describes systems and methods for function control in a calculation device. A wireless transmitter is installed in a functionality environment that transmits an environment indication that is received by a calculation device when it is moved within range of the transmitter. The calculation device decodes the environment indication to find out that the memory store functionality of the calculation device must be disabled.

Document US2014361995 A1 describes generally a near field communication unit in a tablet device and the principle of detecting wireless communication between the near field communication unit of the tablet device and a near field communication unit of a primary computing device.

Document EP2677668 A1 describes a system for restricting some applications (e.g., call, camera) of a mobile terminal in a predetermined area. A NFC reader installed an an entrance sends restriction information to the NFC controller of the terminal, a base-band chip of which has "registered" application IDs (AIDs) in the NFC controller. The latter informs the former that the AID has been selected and the application is restricted accordingly.

### Summary of the Invention

As described above, according to the related art disclosed in JP-B-4134416, it is possible to see the display of the function restriction state, thereby recognizing that the electronic calculator is in the examination mode. However, for example, when a student taking an examination uses the electronic calculator, it is difficult for a supervisor or the like to see the function display area of the small screen in order to check whether the electronic calculator is in the examination mode. Meanwhile, in a case of largely displaying the information on whether the electronic calculator is in the examination mode, the examiner can easily see the corresponding information, but operations which have been performed by the student taking the examination until that moment are interrupted or invalidated.

The invention is as set out in the independent claims 1 and 5, preferred forms being set out in the dependent claims 2 to 4.

### Brief Description of the Drawings

FIG. 1 is a view illustrating an electronic device and a communication device according to an embodiment.
FIGS. 2A to 2C are views illustrating examples of a wireless communication function which is used between a scientific calculator (the electronic device) and the communication device according to the embodiment.
FIG. 3 is a blowing direction illustrating electronic circuit components of the electronic device (the scientific calculator) according to the embodiment.
FIG. 4 is a block diagram illustrating electronic circuit components of the communication device according to the present embodiment.
FIG. 5 is a flow chart illustrating operations of the electronic device of the embodiment related to setting of an examination mode.
FIG. 6 is a flow chart illustrating operations of the communication device of the embodiment related to setting of the examination mode.
FIG. 7 is a flow chart illustrating operations of the communication device of the embodiment related to setting of the examination mode.
FIG. 8 is a view for explaining specific operation examples of the electronic device and the communication device according to the embodiment.
FIG. 9 is a view for explaining specific operation examples of the electronic device and the communication device according to the embodiment.

### Detailed Description of the Invention

Hereinafter, embodiments of the present invention will be described with reference to the accompanying drawings.

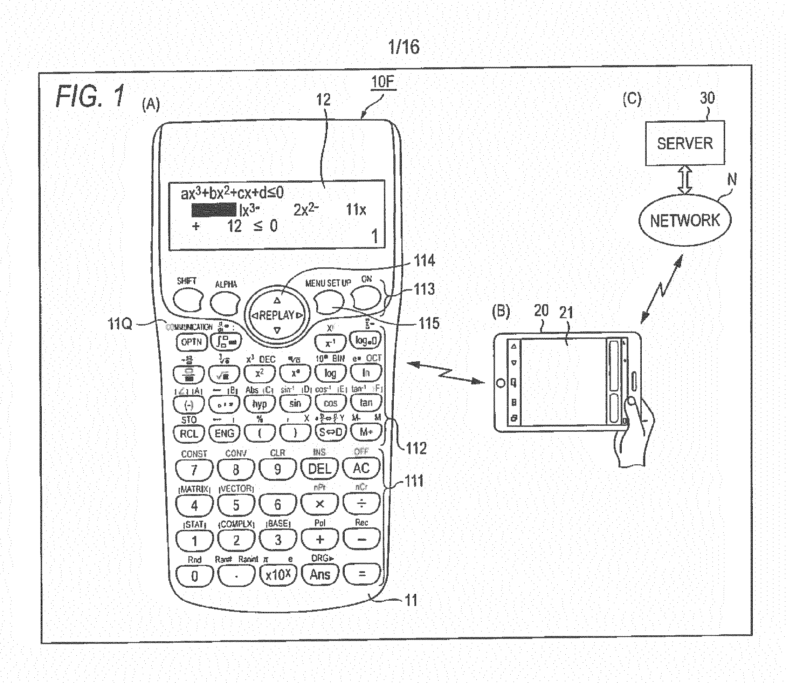

FIG. 1 is a view illustrating an electronic device 10 and a communication device 20 according to an embodiment of the present invention. The present embodiment will be described on the assumption that, for example, a scientific calculator 10F is embodied as the electronic device 10, and for example, a tablet terminal is embodied as the communication device 20. The communication device 20 is not limited to a tablet terminal, and can be configured as a personal digital assistant (PDA), a smart phone, a note personal computer (PC), a game console, or the like. Hereinafter, a system including the electronic device 10 (the scientific calculator 10F), the communication device 20, and a server 30 provided on a communication network N as shown in FIG. 1 will be described as an example.

The electronic device 10 (the scientific calculator 10F) is configured in a small size due to the necessity of portability such that a user can sufficiently grip it with one hand and operate it with one hand. On the front surface of the main body of the electronic device 10, a key input unit 11 and a display output unit 12 arc provided.

The key input unit 11 includes a numerical-value/operation-symbol key group 111 for inputting numerical values or mathematical expressions, or issuing a calculation performance instruction, an arithmetic-function/function key group 112 for inputting various arithmetic functions or starting a memory function, a mode setting key group 113 for displaying a menu screen of various operating modes or issuing an operating-mode setting instruction, and a cursor key 114 for performing various operations such as an operation to move a cursor displayed on the display output unit 12 and an operation to select a data item.

As the number/operation-symbol key group 111, "0" to "9" (numeric) keys, "+", "-", "×", and "÷" (four basic operation symbols) keys, "Ans" and "=" (execution) keys, "AC" (clear) key, and so on are arranged.

As the arithmetic-function/function key group 112, an "x⁻¹" (x to the negative one power; the reciprocal of x) key, a "√□" (root) key, a "□/□" (fraction) key, a "sin" (sine) key, an "M+" (memory plus) key, an "OPTN" (option) key, a "RCL" (memory call) key, and so on are arranged.

As the mode setting key group 113, a "MENU/SETUP" key 115, a "SHIFT" (shift) key, an "ALPHA" (alphabet) key, an "ON" (power-on) key, and so on are arranged.

Also, if each key of the number/operation-symbol key group 111 and the arithmetic-function/function key group 112 is operated immediately after the "SHIFT" key is operated, the corresponding key acts as a key for instructing a sub function assigned to the corresponding key, not a key for instructing a main function assigned to the corresponding key. For example, an "OPTN" key operated immediately after an operation on the "SHIFT" key acts as a "COMMUNICATION" key 11Q, and the "MENU/SETUP" key 115 operated immediately after an operation on the "SHIFT" key acts as a "test mode" key (an examination mode key). In a case where the "MENU/SETUP" key 115 is independently operated, it acts as a "menu" key, whereby it is possible to display a menu of a plurality of data processing functions (for example, calculation modes) of the scientific calculator 10F.

The display output unit 12 is composed of a dot matrix type liquid crystal display unit.

The scientific calculator 10F has a function of transmitting data on numerical values and calculation expressions input by user's operations on the key input unit 11, and calculation result data based on the calculation expressions, to the communication device 20 connected to the scientific calculator, by near field communication. Also, the scientific calculator 10F has a mode setting function of setting a function restriction mode (an examination mode) in which some functions of the plurality of functions are restricted, and a function of transmitting identification information (an unique ID) of the scientific calculator 10F to the communication device 20 connected to the scientific calculator, by near field communication.

The communication device 20 having an information output function of receiving the identification information and mode setting information representing whether the examination mode has been set in the scientific calculator 10F, and outputting unique information stored in association with the identification information and state information representing the state of the scientific calculator 10F based on the mode setting information.

For example, if a user designates an inequality calculation mode and inputs an inequality "ax3 + bx2 + cx + d ≤ 0" and numerical values of variables of the inequality, by operating the key input unit 11, and performs a calculation performance operation (on a "=" key), the scientific calculator 10F displays "x ≤ a, b ≤ x ≤ c" and "x ≤ -3, 1 ≤ x ≤ 4" as a calculation result Ga as shown in (A) of FIG. 1. In a case where the examination mode has been set, if a communication connection between the scientific calculator 10F and the communication device 20 is established, the scientific calculator temporarily displays the examination mode setting state, in place of the display of the data on the input function expression, the calculation result, and the like, while transmitting information representing the examination mode setting state to the communication device 20. Then, if a predetermined time elapses, the scientific calculator 10F returns to the original display state in which it displays the data on the input expression, the calculation result, and the like.

Now, a communication function for performing communication between the scientific calculator 10F configured as the electronic device 10 and the communication device 20 will be described.

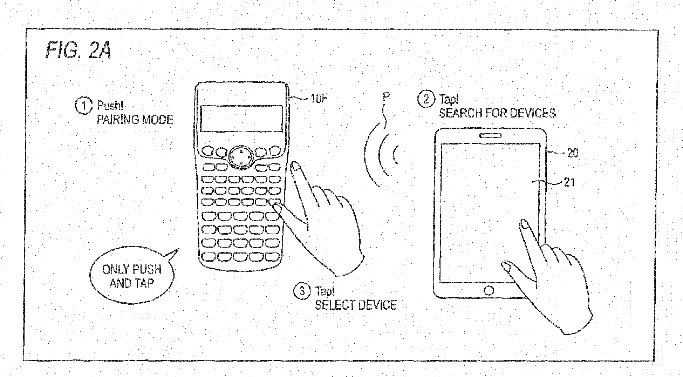

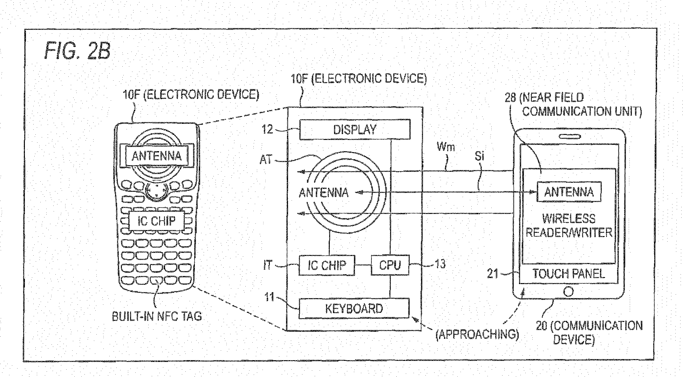

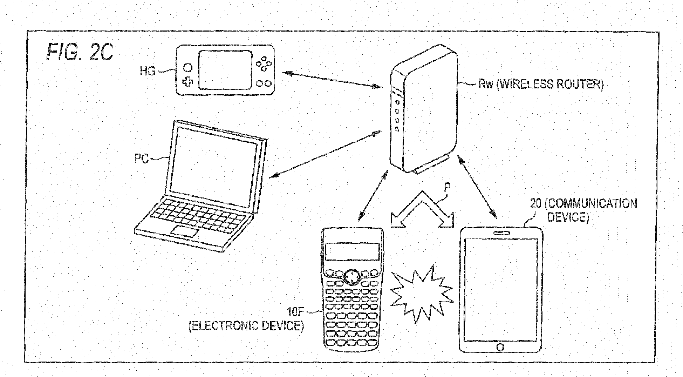

FIGS. 2A and 2C are views illustrating examples of a wireless communication function which is used between the scientific calculator 10F (the electronic device 10) and the communication device 20. Fig 2B illustrates NFC communication according to the invention. As the wireless communication function, any one of near field communication such as Bluetooth (registered as a trade mark) as shown in FIG. 2A, near field communication such as NFC (near field communication) as shown in FIG. 2B, near field communication using a wireless LAN (local area network) such as WiFi as shown in FIG. 2C, and other types of near field communication may be used.

In a case of using near field communication such as Bluetooth as shown in FIG. 2A, if a predetermined key (button) of the scientific calculator 10F is pushed, interrogation is performed on the communication device 20 existing around the scientific calculator. Then, the communication device displays a list of partner devices capable of communication and including the scientific calculator 10F. If the scientific calculator 10F is designated (tapped) from the displayed partner device list, the scientific calculator 10F and the communication device 20 are paired such that a communication connection P is established between them.

Also, near field communication such as NFC shown in FIG. 2B is a wireless communication function of performing wireless communication by an induced current caused by a magnetic field from the communication device 20.

For example, an NFC tag built in the scientific calculator 10F includes a coil antenna AT in which an induced current flows in response to a magnetic field Wm which is generated from a near field communication unit (a wireless reader/writer) 28 of the communication device 20, and an IC chip IT which uses the induced current flowing in the coil antenna AT as electromotive force to operate. A CPU 13 of the scientific calculator 10F is connected to the IC chip IT of the NFC tag by a cable, and has a wired reader/writer function capable of directly reading and writing data from and in the IC chip IT. In this case, between the NFC tag of the scientific calculator 10F and the near field communication unit (the wireless reader/writer) 28 of the communication device 20, wireless communication Si is performed.

Also, in a case of using near field communication using a wireless LAN such as WiFi shown in FIG. 2C, for example, only preset partner communication devices of individual communication devices (such as the scientific calculator 10F, the communication device 20, a personal computer PC, and a game console HG) connected to the wireless LAN by a WiFi router Rw are paired such that a communication connection P is established between them. In this case, if the partner communication devices detect an impact such as a light touch with each other, the partner communication devices are paired such that a communication connection P is established between them.

Alternatively, the scientific calculator 10F (the electronic device 10) and the communication device 20 may be connected by a cable such as a USB (universal serial bus) cable or a LAN cable such that wire communication is possible.

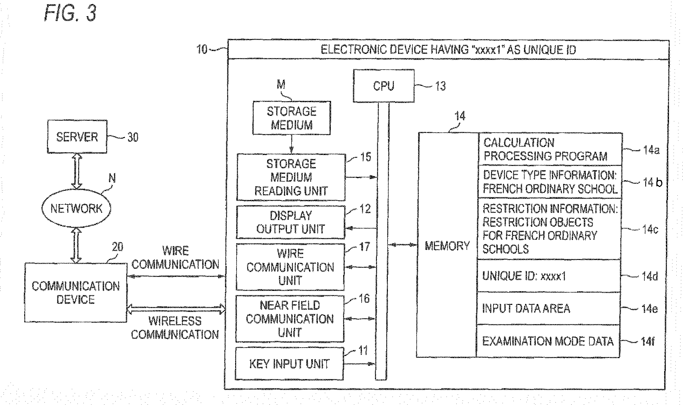

FIG. 3 is a block diagram illustrating electronic circuit components of the electronic device 10 (the scientific calculator 10F) according to the present embodiment.

The electronic circuit of the electronic device 10 includes the CPU 13, a memory 14, a storage medium reading unit 15, a near field communication unit 16, and a wire communication unit 17, in addition to the key input unit 11 and the display output unit 12.

The CPU 13 controls operations of the individual circuit units according to a calculation processing program 14a stored in the memory 14, thereby performing various calculation processes based on key input signals from the key input unit 11. The calculation processing program 14a may be stored in the memory 14 in advance, or may be a program downloaded from a storage medium M such as a memory card to the memory 14 by the storage medium reading unit 13. Even if the user operates the key input unit 11, the calculation processing program 14a is not rewritten.

In predetermined areas of the memory 14, device type information 14b, restriction information 14c, and a unique ID 14d are stored in advance so as not to be rewritable. The device type information 14b is information representing the device type of the electronic device 10 according to its use. For example, as the device type information 14b, information representing that the electronic device is a type configured on the assumption that it would be used in ordinary schools in France is stored in advance. The restriction information 14c is information (restriction object information) representing functions which are restricted on the basis of the device type information 14b when the examination mode is in an ON state. Here, the restriction information 14c represents functions which are unavailable during examinations in French ordinary schools. The unique ID 14d is unique ID data set for the electronic device 10 in order to identify the electronic device 10. Also, a plurality of device type information items 14b may be stored in advance such that it is possible to select any one by user's operations. In this case, the CPU 13 can use the restriction information 14c according to a device type information item 14b selected by the user.

Also, the memory 14 has an input data area 14e for storing data which the user can rewrite, and a mode setting area for storing a mode state set by user's operations, and these areas are rewritable. In the mode setting area, for example, examination mode data 14f (mode setting information) representing whether the examination mode is in an ON state or an OFF state is stored.

If key codes are input by the key input unit 11, data on the key codes are sequentially input to the input data area 14e. Also, if a calculation mode is set by operating the "MENU/SETUP" key 115, data on calculation expressions and tables which can be created on the basis of the input data in the set calculation mode is stored in the input data area 14e so as to be rewritable. Examples of calculation modes include a basic calculation mode, a complex number calculation mode, a base-n numeral system calculation mode, a matrix calculation mode, statistic calculation modes (such as a one-variable statistic calculation mode and a two-variable statistic calculation mode), a distribution calculation mode, and a table calculation mode. The CPU 13 performs a plurality of functions of performing processes based on the individual calculation modes on input data, according to the calculation processing program 14a.

The near field communication unit 16 has a function of performing wireless communication with the communication device 20 by the wireless communication function such as Bluetooth, NFC, or WiFi, as described with reference to FIGS. 2A to 2C.

The wire communication unit 17 has a function of performing wire communication with the communication device 20 by a wire communication function using a cable such as a USB cable or a LAN cable.

The electronic device 10 has a function for implementing a display control method related to setting of the examination mode. According to this function, the CPU 13 controls operations of the individual circuit units according to commands described in the calculation processing program 14a, such that the software and hardware of the electronic device operate in cooperation, thereby implementing the display control method as will be described in the following description of operations.

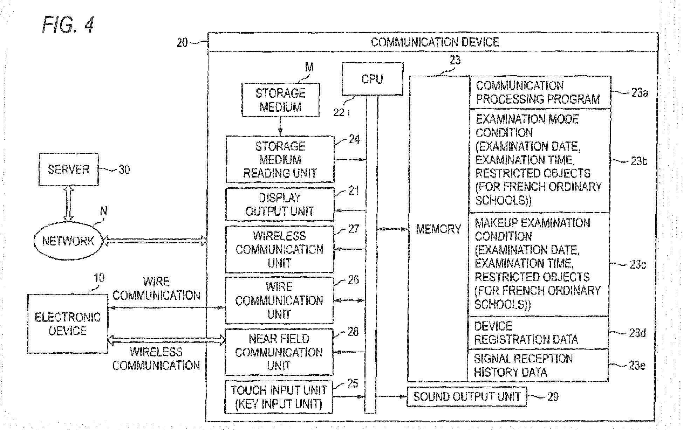

FIG. 4 is a block diagram illustrating electronic circuit components of the communication device 20 according to the present embodiment.

The electronic circuit of the communication device 20 includes a display output unit 21, a CPU 22, a memory 23, a storage medium reading unit 24, a touch input unit 25 integrally provided on the display output unit 21, a wire communication unit 26, a wireless communication unit 27, a near field communication unit 28, and a sound output unit 29. Also, the touch input unit 25 may include a key input unit such as a power key.

The CPU 22 controls operations of the individual circuit units according to a communication processing program 23a stored in the memory 23, in response to touch (or key) input signals from the touch input unit 25, or signals received by the wireless communication unit 27 or the near field communication unit 28. The communication processing program 23a may be stored in the memory 23 in advance, or may be a program downloaded from a storage medium M such as a memory card to the memory 23 by the storage medium reading unit 24.

Further, data such as an examination mode condition 23b, a makeup examination condition 23c, device registration data 23d, and signal reception history data 23e is stored in corresponding areas of the memory 23 so as to be rewritable. The examination mode condition 23b is data representing the condition of an examination in which electronic devices 10 can be used, and is stored, for example, by input operations of a supervisor to supervise the examination. The examination mode condition 23b includes data such as the date of the examination, the time of the examination, and restriction objects. The makeup examination condition 23c is data representing the condition of an examination (a makeup examination) to be conducted separately from the examination (main examination) of the examination date input as the examination mode condition 23b. Similarly to the examination mode condition 23b, the makeup examination condition 23c is input, for example, by the supervisor, and includes data on the date of the examination, the time of the examination, and restriction objects. The device registration data 23d is data on at least one electronic device 10 which can be used in the examination, and is data in which the unique ID (identification information) of each electronic device 10 is associated with unique information of the corresponding electronic device 10. The device registration data 23d is input before the examination starts, for example, by supervisor's operations, and, for example, data on electronic devices 10 which are used by students to take the examination is input. For example, the communication device 20 may receive unique IDs 14d and unique information of the electronic devices 10 from the electronic devices 10 by near field communication. For example, after an electronic device 10 is set to a registration mode in advance, if a communication connection with the communication device 20 is established, the electronic device 10 transmits a unique ID 14d and unique information stored in advance so as not to be rewritable. The unique information includes the user name, reference number (examination number), and the like of a user (a student) who uses the electronic device 10. Also, unique information may be input by supervisor's operations on the communication device 20. Also, the device registration data 23d may be input by imaging a code (for example, a two-dimensional code) displayed on the display output unit 12 of the electronic device 10 with a camera (not shown in the drawings) and decoding the two-dimensional code, not by near field communication. In this case, the electronic device 10 should have a function of generating a two-dimensional code including the unique ID 14d and the unique information of the electronic device 10 and displaying the two-dimensional code. The signal reception history data 23e is data representing data representing the history of data received from electronic devices 10 by near field communication during the examination. The signal reception history data 23e includes unique IDs, device type information, and examination mode data which are received from electronic devices 10, and the reception times of the data.

The wire communication unit 26 has a function of performing wire communication with each electronic device 10 by the wire communication function using a cable such as a USB cable.

The wireless communication unit 27 has a function of accessing a network N through a public wireless telephone network.

The near field communication unit 28 has a function of performing wireless communication with each electronic device 10 by the wireless communication function such as Bluetooth, NFC, or WiFi as described with reference to FIGS. 2A to 2C.

The sound output unit 29 outputs sounds of various patterns such as electronic sounds under control of the CPU 22 based on the communication processing program 23a.

The communication device 20 has a function of implementing an information output method related to setting of the examination mode which is performed in each electronic device 10. According to this function, the CPU 22 controls operations of the individual circuit units according to commands described in the communication processing program 23a, such that the software and hardware of the communication device operate in cooperation, thereby implementing the information output method as will be described in the following description of operations.

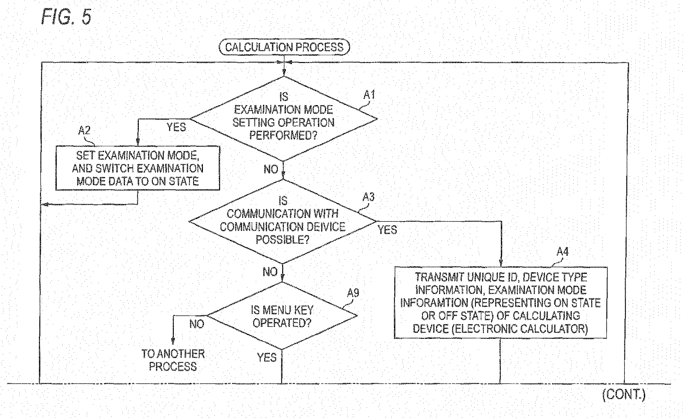

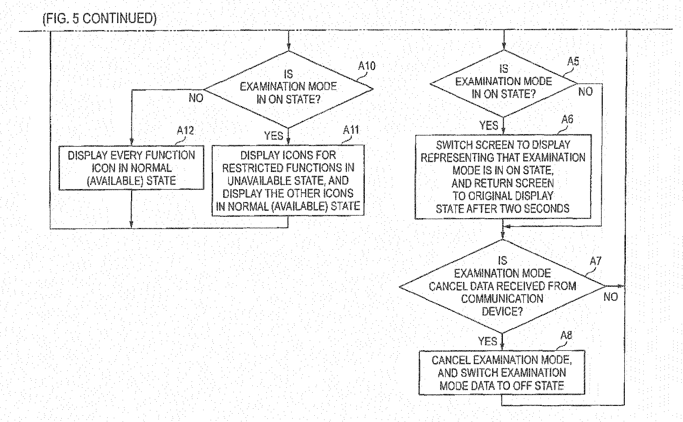

Now, operations of electronic devices 10 (scientific calculators 10F) according to the present embodiment will be described. FIG. 5 is a flow chart illustrating operations of an electronic device 10 of the present embodiment related to setting of the examination mode.

Hereinafter, a case where a student uses an electronic device 10 (a scientific calculator 10F) during the examination will be described as an example. The student is allowed to use the electronic device 10 during the examination, but is not allowed to use every function of the electronic device 10. For this reason, before the examination starts, the student sets the examination mode, whereby some functions of the electronic device 10 are restricted. During the examination, the supervisor supervising the examination performs wireless communication between the communication device 20 and the electronic device 10 by near field communication, such that the communication device 20 receives the examination mode data 14f stored in the electronic device 10. For example, in a case where the communication device 20 and the electronic device 10 perform near field communication by NFC shown in (B) of FIG. 2, the supervisor brings the communication device 20 close to the electronic device 10 such that the communication device 20 can receive the examination mode data 14f. The supervisor checks whether the examination mode has been properly set in the electronic device 10, on the basis of the screen of the communication device 20 displayed on the basis of the examination mode data.

First, if setting of the examination mode is instructed by an operation on the "test mode" key (the examination mode key) (consecutive operations on the "SHIFT" key and the "MENU/SETUP" key 115) ("Yes" in STEP A1), the CPU 13 of the electronic device 10 sets the device state to the examination mode and switches the examination mode data 14f to a state representing that the examination mode is in the ON state (STEP A2). In other words, on the basis of the restriction information 14c, the CPU 13 makes some predetermined functions of the plurality of functions of the electronic device 10 unavailable.

Also, in a case where displaying of a menu is instructed by an operation on the "MENU/SETUP" key 115 (a menu key) ("Yes" in STEP A9), the CPU 13 determines whether the examination mode is in the ON state, with reference to the examination mode data 14f. In a case where the examination mode has not been set ("No" in STEP A10), the CPU 13 controls the display output unit 12 such that the display output unit displays a menu which is a list of icons corresponding to the plurality of functions (calculation modes), respectively. In this case, the electronic device 10 can perform every function selected from the menu.

Meanwhile, in the case where displaying of a menu is instructed ("Yes" in STEP A9), if the examination mode is in the ON state ("Yes" in STEP A10), the CPU 13 controls the display output unit 12 such that the display output unit displays a menu including the icons corresponding to the plurality of functions (the calculation functions) and images added to the icons of the restricted functions and representing that the corresponding functions are unavailable (STEP A11). With reference to the icons displayed on the menu, the student can recognize the available functions and the unavailable functions. The student takes the examination using only the available functions of the electronic device 10 during the examination.

If the communication device 20 is brought close to the electronic device such that the near field communication unit 16 and the near field communication unit 28 of the communication device 20 can perform communication ("Yes" in STEP A3), the CPU 13 outputs the examination mode data 14f representing whether the examination mode is in the ON state or the OFF state. In other words, the CPU 13 transmits the unique ID 14d, the restriction information 14c, and the examination mode data 14f representing whether the examination mode is in the ON state or the OFF state, to the communication device 20 (STEP A4). As a result, the communication device 20 can determine that the electronic device 10 is in the examination mode. Also, in a case where the examination mode is in the ON state ("Yes" in STEP A5), the CPU 13 switches the display screen of the display output unit 12 to a screen representing that the examination mode is in the ON state (STEP A6). As a result, it is possible to recognize that the examination mode has been set, on the display output unit 12 of the electronic device 10. Also, if communication with the communication device 20 is performed, the CPU 13 registers the communication history in the memory.

After the display is switched, if a predetermined time (for example, 2 seconds) elapses, the CPU 13 switches the display screen of the display output unit 12 to the original state displayed before the communication with the communication device 20. For example, if communication with the communication device 20 starts when the display output unit 12 displays numerical values and expressions input by operating the key input unit 11, the electronic device 10 displays the screen representing that the examination mode is in the ON state, only for a short time, and then returns to the original state in which it displays the input numerical values and expressions. Therefore, the student can keep inputting numerical values and expressions.

Also, when communication with the communication device 20 is performed (STEPS A3 and A4), if the examination mode is not in the ON mode ("No" in STEP A5), the CPU 13 should switch the display screen of the display output unit 12 to a screen representing that the examination mode is not in the ON mode.

After the time for the examination is over, if examination mode cancel data is received by communication with the communication device 20 ("Yes" in STEP A7), the CPU 13 cancels the examination mode such that every function is available, and switches the examination mode data 14f to a state representing the examination mode is in the OFF state (STEP A8). The examination mode cancel data is received in a case where the electronic device has transmitted the examination mode data 14f representing the examination mode is in the ON state to the communication device 20 during the examination. In other words, after the electronic device 10 is set to the examination mode, for example, during the examination, the examination mode cannot be canceled by user's operations. The details thereof will be described in the following description of operations of the communication device 20.

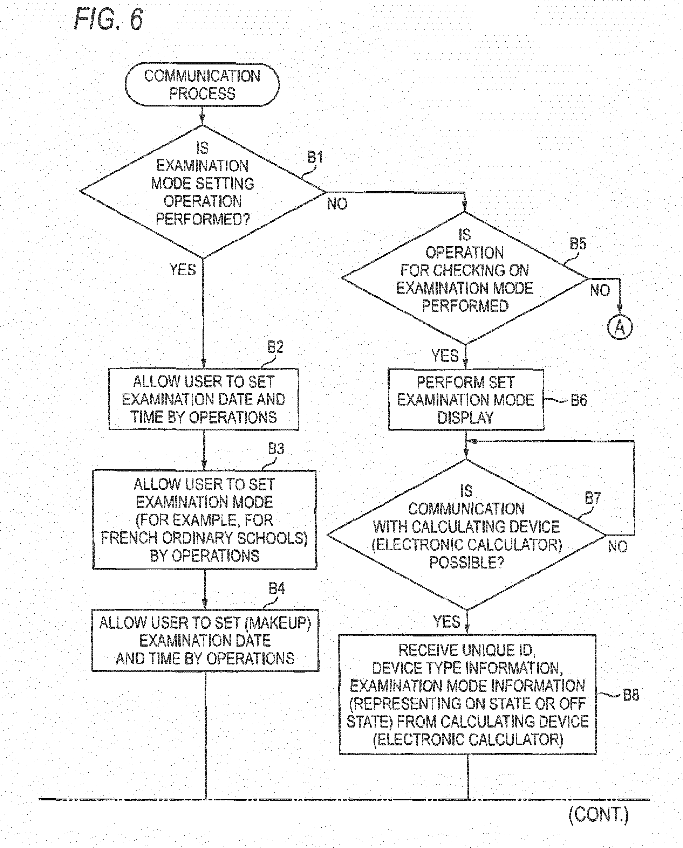

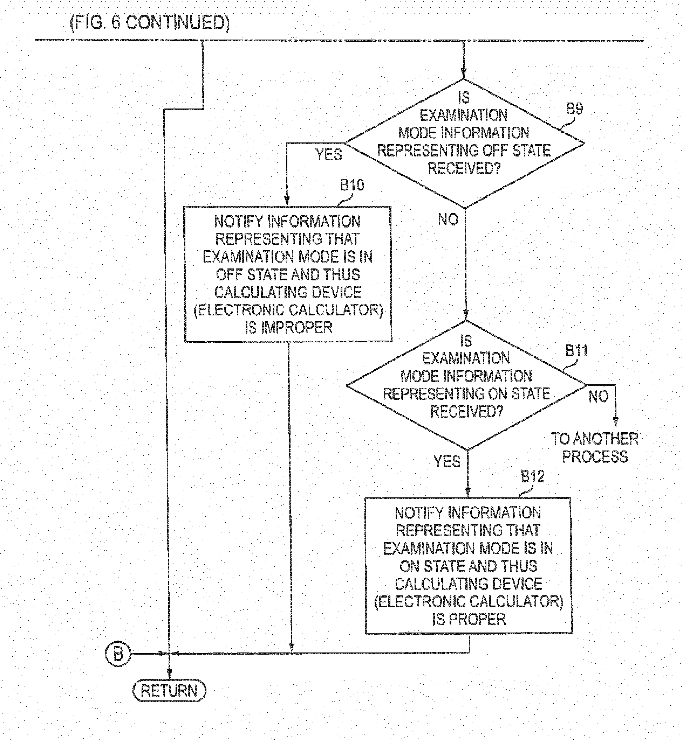

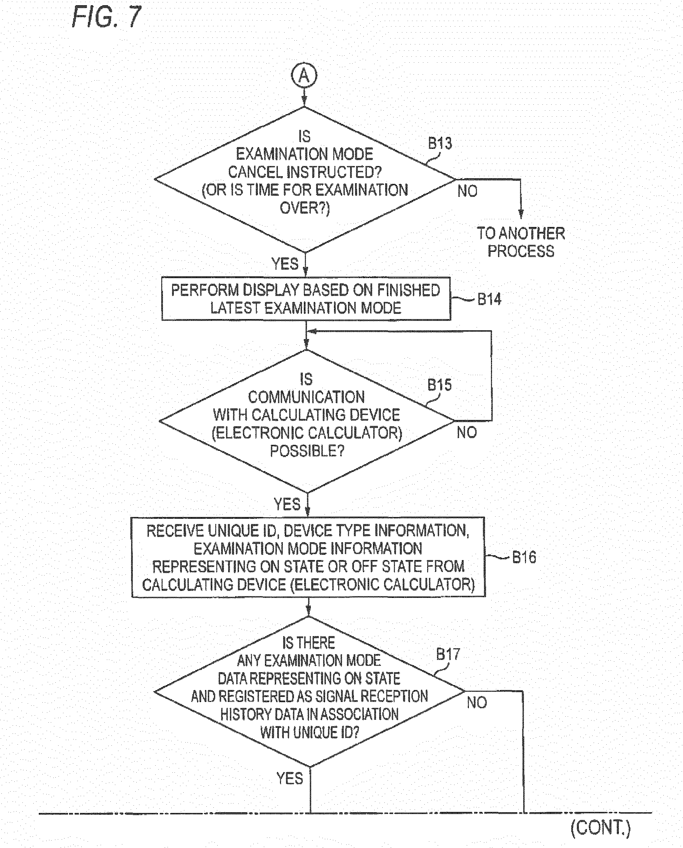

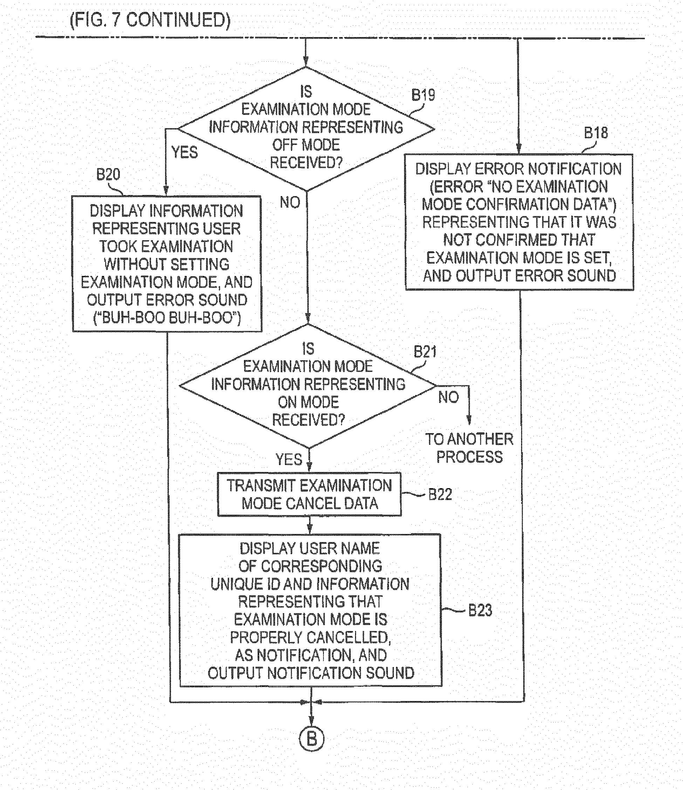

Now, operations of the communication device 20 according to the present embodiment will be described. FIGS. 6 and 7 are flow charts illustrating operations of the communication device 20 of the present embodiment related to setting of the examination mode.

In order to use the communication device 20 to check whether the examination mode has been set in the electronic device 10, an examination mode condition and a makeup examination condition are input in advance before start of the examinations, for example, by supervisor's operations. If setting of the examination mode is instructed by operating the touch input unit 25 ("Yes" in STEP B1), the CPU 22 displays a setting screen on the display output unit 21. The CPU 22 sets the date of the examination and the time of the examination input on the setting screen (STEP B2), and sets data on restriction objects (STEP B3). As the restriction object data, for example, data "FOR FRENCH ORDINARY SCHOOLS" is set. After the examination date, the examination time, and the restriction object data are set, the CPU 22 stores them as an examination mode condition 23b in the corresponding area of the memory such that they are rewritable. Further, the CPU 22 displays a setting screen for setting a makeup examination condition on the display output unit 21, and the date and time of the makeup examination are input on the setting screen. Then, the CPU 22 registers the date and time of the makeup examination as a makeup examination condition 23c in a predetermined area of the memory (STEP B4). Also, as restriction object data for the makeup examination, the same data as the examination mode condition 23b is stored.

Thereafter, when the communication device 20 is used to check whether the examination mode has been set in the electronic device 10, checking on whether the examination mode has been set is instructed, for example, by supervisor's operations. If checking on whether the electronic device is instructed ("Yes" in STEP B5), the CPU 22 controls the display output unit 21 such that the display output unit displays the contents set in the examination mode condition 23b, such as the examination date, the examination time, and the restriction objects (here, "FOR FRENCH ORDINARY SCHOOLS") (STEP B6). With respect to the restriction objects, marks clearly showing functions restricted in the electronic device 10 are added.

For example, the supervisor instructs students to take the examination to set the examination mode in their electronic devices 10. Then, immediately before the examination or during the examination, the supervisor performs communication between the communication device 20 and the electronic device 10 of each student, thereby checking whether the examination mode has been set in the electronic device 10.

If a communication connection with an electronic device 10 is established ("Yes" in STEP B7), the CPU 22 receives the unique ID, the device type information, and the examination mode data (information on whether the examination mode is in the ON state or the OFF state) from the electronic device 10. The CPU 22 registers the data received from the electronic device 10, as signal reception history data 23e, in the memory.

Then, if the CPU 22 determines that the examination mode has been set in the electronic device 10 (the state where the examination mode is in the ON state) ("Yes" in STEP B11), the CPU 22 notifies that the examination mode of the electronic device 10 is in the ON state and thus the electronic device is proper (STEP B12). For example, the CPU 22 controls the sound output unit 29 such that the sound output unit outputs a sound of a predetermined pattern (a sound "Ping-Pong") for notifying the supervisor that the electronic device is proper. Also, the CPU 22 controls the display output unit 12 such that the display output unit displays the signal reception history on the basis of the data received from the electronic device 10. As the signal reception history, for example, a user name corresponding to the unique ID received from the electronic device 10, information on the state of the examination mode (the ON state), and confirmation time (the time of reception of the examination mode data from the electronic device 10). For example, in order to make it possible to easily recognize that the examination mode is in the ON state, the signal reception history is displayed in a specific display color (for example, blue). Also, the user name corresponding to the unique ID can be acquired by referring to the device registration data 23d on the basis of the unique ID.

Meanwhile, in a case where the CPU 22 determines that the examination mode has not been set in the electronic device 10 (the examination mode is in the OFF state), on the basis of the examination mode data ("Yes" in STEP B9), the CPU 22 notifies that the examination mode of the electronic device 10 is in the OFF state and thus the electronic device is improper (STEP B10). For example, the CPU 22 controls the sound output unit 29 such that the sound output unit outputs a sound of a predetermined pattern (a sound "PEEPEE") for notifying the supervisor that the electronic device is improper. Also, the CPU 22 controls the display output unit 12 such that the display output unit displays the signal reception history on the basis of the data received from the electronic device 10. As the signal reception history, for example, the user name corresponding to the unique ID received from the electronic device 10, information on the state of the examination mode (the OFF state), and confirmation time (the time of reception of the examination mode data from the electronic device 10). For example, in order to make it possible to easily recognize that the examination mode is in the OFF state, the signal reception history is displayed in a specific display color (for example, red), and is displayed in a character shape (for example, italic type characters) different from a shape which is used in a case where the examination mode is in the ON state.

As described above, during the examination time, the communication device 20 receives data representing whether the examination mode has been set, by performing wireless communication with the electronic device 10 of each student, and registers the received data in the memory, and notifies whether the examination mode has been set in the electronic device 10 such that the supervisor or the like can recognize whether the examination mode has been set. Therefore, the supervisor can easily recognize whether the examination mode has been set in the electronic device 10, without seeing the display screen of the electronic device 10, and without hindering the student from operating the electronic device 10.

Now, a method of canceling the examination mode set in the electronic device 10 will be described.

If cancel of the examination mode is instructed by input operations of the supervisor or the like, or the examination time set as the examination mode condition 23b finishes ("Yes" in STEP B13), the CPU 22 of the communication device 20 controls the display output unit 21 such that that display output unit displays the contents set as the examination mode condition 23b, such as the examination date, the examination time, and the restriction objects (STEP B14). The supervisor recognizes the examination as an examination mode cancel object by referring to a table of the display output unit 21.

The supervisor performs communication between the communication device 20 and the electronic device 10 of each student having finished the examination. If a communication connection with the electronic device 10 is established ("Yes" in STEP B15), the CPU 22 receives the unique ID, the device type information, the examination mode data (information on whether the examination mode is in the ON state or the OFF state) from the electronic device 10 (STEP B16). The CPU 22 checks whether there is any examination mode data representing the ON state of the examination mode and registered as signal reception history data 23e in association with the unique ID received from the electronic device 10 before the reception of the current examination mode data. In other words, the CPU determines whether the communication device 20 confirmed that the examination mode had been set in the electronic device 10 before the start of the examination or during the examination.

In a case where there is registered examination mode data representing the ON state of the examination mode ("Yes" in STEP B17), the CPU 22 determines whether the current examination mode data received from the electronic device 10 is information representing that the examination mode is in the ON state or information representing that the examination mode is in the OFF state.

If the current examination mode data is information representing that the examination mode is in the OFF state ("Yes" in STEP B19), the CPU 22 controls the display output unit 21 such that the display output unit displays information representing that the student took the examination without setting the examination mode, and controls the sound output unit 29 such that the sound output unit outputs a sound of a predetermined pattern (a sound "BUH-BOO BUH-BOO") as an error sound (STEP B20). In other words, although it was confirmed during the examination that the examination mode had been set in the electronic device 10, if the examination mode has been canceled without going through the regular procedure (without receiving the examination mode cancel data) immediately after the examination, there is a possibility that the electronic device 10 has been improperly used. Therefore, the communication device notifies a warning.

Meanwhile, in a case where the current examination mode data is information representing that the examination mode is in the ON state ("Yes" in STEP B21), the CPU 22 transmits the examination mode cancel data to the electronic device 10, thereby canceling the examination mode set in the electronic device 10. In order to notify that the examination mode has been properly canceled, the CPU 22 controls the display output unit 21 such that that display output unit displays the user name corresponding to the current unique ID received from the electronic device 10, and controls the sound output unit 29 such that the sound output unit outputs a sound of a predetermined pattern (a sound "Ping-Pong Ping-Pong") representing that the examination mode has been canceled (STEP B23). As described above, after the examination finishes, if the communication device receives the examination mode data from the electronic device 10, it is possible to check whether the examination mode was properly set in the electronic device 10 and the electronic device has been properly used during the examination, and it is possible to cancel the examination mode set in the electronic device 10.

Meanwhile, in a case where there is no examination mode data registered as signal reception history data 23e in association with the unique ID received from the electronic device 10 ("No" in STEP B17), the CPU 22 controls the display output unit 21 such that the display output unit displays an error "NO EXAMINATION MODE CONFIRMATION DATA" as an error notification representing that it was not confirmed that the examination mode had been set, and controls the sound output unit 29 such that the sound output unit outputs a sound of a predetermined sound (a sound "Boo-Boo") as an error sound (STEP B18). Also, in the case where there is no examination mode data registered as signal reception history data 23e, the CPU 22 notifies the electronic device 10 of an error representing that it has not confirmed that the examination mode has been set, such that the electronic device displays the notified error.

As described above, after the exam finishes, if the examination mode data is received from the electronic device 10, it is possible to check whether the electronic device 10 is improper, that is, whether the examination mode has been improperly canceled, or whether it was not confirmed that the examination mode had been set during the examination.

In a case where any improper electronic device 10 is recognized, it is possible to let a student using the corresponding electronic device 10 take a makeup examination on the basis of the contents set the makeup examination condition 23c. In the makeup examination, as described above, the student should set the examination mode in the electronic device 10, and then use the electronic device, and whether the examination mode has been set should be checked by the communication device 20 during the makeup examination. After the makeup examination finishes, if it is confirmed that the examination mode was properly set in the electronic device 10 and the electronic device has been properly used during the makeup examination, the examination mode cancel data is transmitted from the communication device 20 to the electronic device 10, whereby the examination mode of the electronic device 10 is canceled.

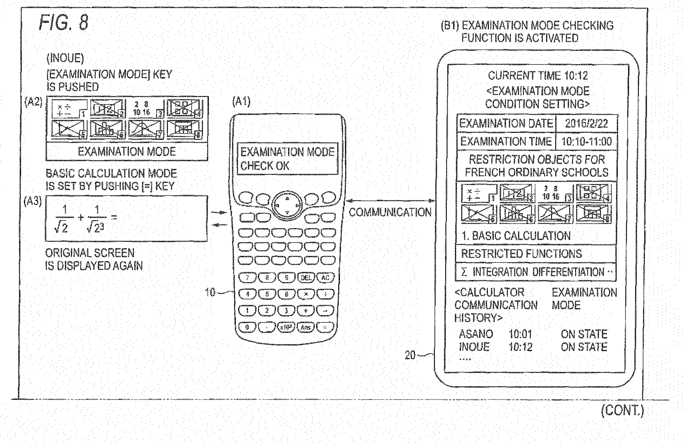

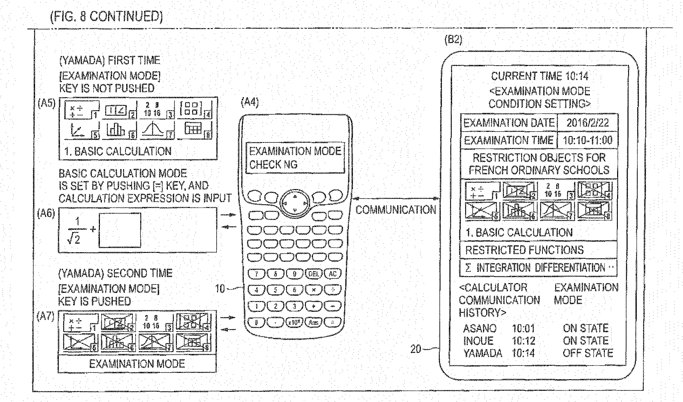

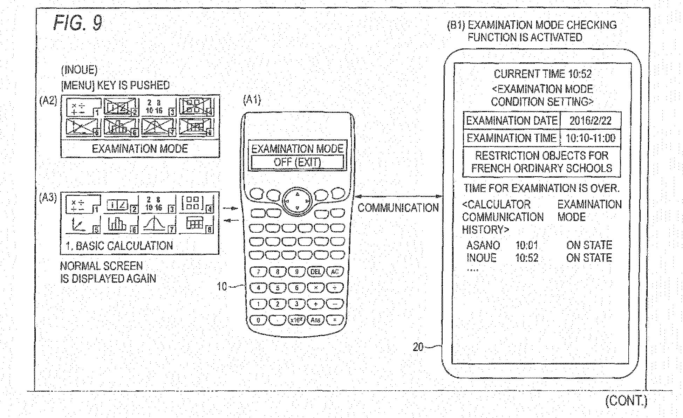

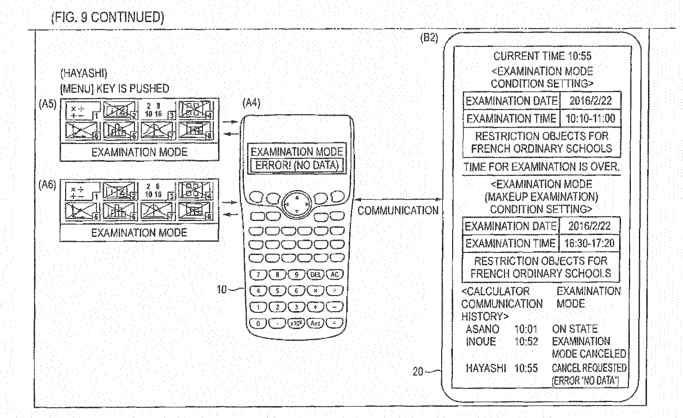

Now, specific operation examples of the electronic devices 10 and the communication device 20 described above will be described with reference to FIGS. 8 and 9.

In FIG. 8, (A2) shows an example in which the an electronic device 10 which a student "INOUE" uses has been set to the examination mode and thus menu display has been performed by an operation on the menu key. For example, as shown by (A2) of FIG. 8, the electronic device 10 displays a menu including a message "EXAMINATION MODE" representing that the examination mode has been set, icons corresponding to eight functions, and images ("x" marks) superimposed on icons corresponding to six functions of the eight functions in order to show that the corresponding functions are unavailable.

The student can select an icon on the menu by operating the cursor key 114, and operate the "=" (execution) key, thereby instructing the electronic device to perform a corresponding function. In this case, only the icons of the functions which are not restricted can be selected. Here, for example, it is assumed that an icon positioned at the left end of the upper portion of the menu is selected, whereby performance of the basic calculation mode is instructed. In this case, in the basic calculation mode, the student can input expressions and so on as shown by (A3) of FIG. 8 by operating the key input unit 11.

During the examination, the communication device 20 displays the contents set in the examination mode condition (the examination date, the examination time, and the restriction objects), for example, as shown by (B1) of FIG. 8. With respect to the restriction objects, a menu clearly showing the restricted functions similarly in the menu displayed on the electronic device 10, and the names (such as "INTEGRATION" and "DIFFERENTIATION") of the restricted functions are displayed.

During the examination, the communication device 20 can determine that the examination mode is in the ON state, on the basis of the examination mode data transmitted from the electronic device 10 by communication with the electronic device 10. In this case, on the screen of the communication device 20, as a communication history, the user name "INOUE" and the examination mode state "ON STATE" are displayed as shown by (B1) of FIG. 8. With reference to display of a communication history list, the supervisor who operates the communication device 20 can recognize whether the examination mode has been set. Also, the electronic device 10 displays a message "EXAMINATION MODE CHECK OK" representing that the examination mode is in the ON state, as a result of the communication with the communication device 20, as shown by (A1) of FIG. 8, for a short time, and then returns to the original display state shown by (A3) of FIG. 8.

In FIG. 8, (A5) shows an example in which an electronic device 10 which a student "YAMADA" uses has not been set to the examination mode and performs menu display in response to an operation on the menu key. In this case, the electronic device 10 displays a menu representing that every function (the eight functions) is available, as shown by (A5) of FIG. 8.

In this case, as described above, the student can select an icon on the menu by operating the cursor key 114, and operate the "=" (execution) key, thereby instructing the electronic device to perform a corresponding function. For example, the student can input expressions and the like in the basic calculation mode as shown by (A6) of FIG. 8.

During the examination, the communication device 20 can determine that the examination mode is in the OFF state, on the basis of the examination mode data transmitted from the electronic device 10 by communication with the electronic device 10. In this case, on the screen of the communication device 20, as a communication history, the user name "YAMADA" and the examination mode state "OFF STATE" are displayed as shown by (B2) of FIG. 8. With reference to display of the communication history list, the supervisor who operates the communication device 20 can recognize whether the examination mode has been set. Also, the electronic device 10 displays a message "EXAMINATION MODE CHECK NG" representing that the examination mode is in the OFF state, as a result of the communication with the communication device 20, as shown by (A4) of FIG. 8, for a predetermined time, and then returns to the original display state shown by (A6) of FIG. 8.

For example, when the communication device 20 confirms that the examination mode has not been set, in the above-described manner, if it the examination has not started yet (or even though the examination has started, if it is allowed to set the examination mode), at that moment, it is possible to set the examination mode in the electronic device 10. After the examination mode is set, if the menu key is operated, the menu in which some of the functions are restricted is displayed as shown by (A7) of FIG. 8. Thereafter, if the communication device 20 confirms that the examination mode has been set, by second communication with the electronic device 10, it changes the display of the examination mode state "OFF STATE" shown in the communication history in association with the student "YAMADA", to a display representing that handling has finished (for example, addition of a line (strikethrough)). Also, the communication device 20 displays the user name "YAMADA" and the examination mode state "ON STATE", as the history of the second communication with the electronic device 10. As described above, the communication device 20 can perform communication with an electronic device 10, a plurality of times, and register the examination mode state whenever communication is performed, such that the supervisor can recognize the examination mode state.

FIG. 9 is a view for explaining specific operation examples which are performed after the examination finishes. In FIG. 9, (A2) shows an example in which the electronic device 10 which the student "INOUE" uses performs menu display in response to an operation on the menu key when the examination finishes. In this case, since the examination mode is still in the ON state, the electronic device 10 displays the menu showing that some of the functions are unavailable, as shown by (A2) of FIG. 9. After the examination finishes, if the communication device 20 confirms that the examination mode is in the ON state, by communication with the electronic device 10, since there is information representing the ON state of the examination mode registered by communication during the examination, the communication device transmits the examination mode cancel data to the electronic device 10. Also, the communication device 20 displays the examination mode state "CANCELED" as the communication history with respect to the user name "INOUE", as shown by (B1) of FIG. 9. Meanwhile, if the electronic device 10 receives the examination mode cancel data from the communication device 20, it cancels the examination mode, and displays a message "EXAMINATION MODE OFF(EXIT)" representing that the examination mode has been canceled, as shown by (Al) of FIG. 9, for a predetermined time, and then returns to the original display state. In this case, if displaying of a menu is instructed by an operation on the menu key, the electronic device 10 displays the menu in which every function is available, as shown by (A3) of FIG. 9. In other words, the electronic device 10 returns to a normal use state in which every function of the electronic device 10 is available.

In FIG. 9, (A5) shows an example in which an electronic device 10 which a student "HAYASI" uses performs menu display in response to an operation on the menu key when the examination finishes. In the electronic device 10 which the student "HAYASI" uses, since the examination mode has been set, some of its functions are restricted. However, it is assumed that, during the examination, the communication device 20 did not confirm that the examination had been set. In this case, after the examination finishes, when the communication device 20 receives the examination mode data by communication with the electronic device 10, since there is no data registered in the examination mode history before the reception of the current examination mode data, the communication device displays an error "NO DATA" representing that it was not confirmed that the examination mode had been set, with respect to the user name "HAYASI", as shown by (B2) of FIG. 9. In this case, in order to let the student "HAYASI" take the makeup examination, the communication device 20 displays the makeup examination condition on the display output unit 21. Also, the communication device 20 notifies the electronic device 10 of the error representing that that it was not confirmed that the examination mode had been set, such that the electronic device displays an error message "EXAMINATION MODE ERROR! (NO DATA)" as shown by (A2) of FIG. 9. In this case, since the examination mode has not been canceled, if the menu key is operated, the electronic device 10 displays the menu in which some functions are restricted, as shown by (A6) of FIG. 9. In a case where the electronic device 10 is used during the makeup examination and the communication device 20 confirms that the examination mode has been set, during the makeup examination, after the makeup examination finishes, if the examination mode cancel data is transmitted from the communication device 20, the electronic device 10 cancels the examination mode.

Although the scientific calculators 10F have been described above as examples of the electronic devices 10, the electronic device can be any other device. For example, the electronic devices 10 may be electronic dictionaries, personal computers, smart phones, and the like. The electronic dictionaries, the personal computers, and the smart phones are configured to have a function (an application) of restricting use of specific functions by setting a function restriction mode (an examination mode), and transmit mode setting information representing whether the function restriction mode has been set, by communication with another communication device 20, within a predetermined period.

The methods described in the embodiment, that is, the methods of the processes shown by the flow charts of FIGS. 5 to 7 can be configured as a program, which can executed in a computer, and be stored in recording media, such as memory cards (such as ROM cards and RAM cards), magnetic disks (such as flexible disks and hard disks), optical disks (such as CD-ROMs and DVDs), and semiconductor memories, to distributed. In this case, a computer can download the program recorded on an external storage medium, and control operations according to the program, thereby capable of realizing the same processes as the functions described in the embodiment.

Also, data on the program for realizing the methods can be transmitted in a program code form on a network (the Internet), and the program data can be loaded from a computer connected to the network (the Internet), thereby capable of realizing the same functions as those of the above-described embodiment.

## Claims

1. A system comprising an electronic device (10) and a communication device (20), the electronic device (10) comprising:
a near field communication unit (16) that is configured to perform wireless communication with the communication device (20);
a display (12) comprising a display screen; and
a processor (13),
wherein the processor (13) is configured to perform operations including:
performing a plurality of functions of processing data;
setting a function restriction mode in which at least one function of the plurality of functions is restricted, according to an operation by a user of the electronic device (10);
while the function restriction mode is set,
displaying data input by an uoperation by the user of the electronic device (10), on the display (12);
detecting whether a communication connection with the communication device (20) by the near field communication unit (16) is established; and
if it is detected that the communication connection between the near field communication unit (16) and the communication device (20) is established, for a predetermined period switching the display screen to a screen representing that the function restriction mode is set, and
after the predetermined period elapses, while keeping the function restriction mode to be set, switching the display screen and returning to the display screen displayed before the communication connection has been established between the near field communication unit (16) and the communication device (20), and displaying on the display (12), the data input by the operation by the user of the electronic device (10) thereby enabling the user of the electronic device (10) to continue inputting data; and
wherein the communication device (20) is configured to receive function restriction mode data (14f) stored in the electronic device (10) and enabling a user of the communication device (20) to check whether the function restriction mode has been set in the electronic device (10) on the basis of a screen of the communication device (20) displayed on the basis of the function restriction mode data (14f).

2. The system according to claim 1, wherein:
the processor (13) of the electronic device (10) is configured to perform operations including:
in the detecting process of whether communication with the communication device is established, detecting whether communication is established based on approaching of the communication device.

3. The system according to claim 1, wherein:
the processor (13) of the electronic device (10) is configured to perform operations including
canceling the function restriction mode when data instructing for canceling the function restriction mode is received from the communication device (20).

4. The system according to claim 1, wherein:
the processor (13) of the electronic device (10) is configured to perform operations including
keeping the electronic device to be set in the function restriction mode, unless data indicating the cancel of the function restriction mode is received, after transmitting the information.

5. A control method of a system comprising an electronic device (10) and a communication device (20), the electronic device (10) including a near field communication unit (16) configured to perform wireless communication with the communication device (20), a display (12) comprising a display screen, and a processor (13), the method comprising the steps of:
performing a plurality of functions of processing data;
setting a function restriction mode in which some functions of the plurality of functions are restricted, according to an operation by a user of the electronic device (10);
while the function restriction mode is set, displaying data input by an operation by the user of the electronic device (10), on the display (12);
detecting whether a communication connection with the communication device (20) by the near field communication unit (16) is established; and
if it is detected that the communication connection between the near field communication unit (16) and the communication device (20) is established, for a predetermined period switching the display screen to a screen representing that the function restriction mode is set and displaying the screen representing that the function restriction mode is set, and
after the predetermined period elapses, while keeping the function restriction mode to be set, switching the display screen and returning to the display screen displayed before the communication connection has been established between the near field communication unit (16) and the communication device (20), and displaying on the display (12), the data input by the operation by the user of the electronic device (10) thereby enabling the user of the electronic device (10) to continue inputting data; and
receiving function restriction mode data (14f) stored in the electronic device (10) by the communication device (20) and checking by a user of the communication device (20) whether the function restriction mode has been set in the electronic device (10) on the basis of a screen of the communication device (20) displayed on the basis of the function restriction mode data (14f).

## Patentansprüche

1. System, das eine elektronische Vorrichtung (10) und eine Kommunikationsvorrichtung (20) umfasst, wobei die elektronische Vorrichtung (10) umfasst:
eine Nahfeldkommunikations-Einheit (16), die so ausgeführt ist, dass sie drahtlose Kommunikation mit der Kommunikationsvorrichtung (20) durchführt;
eine Anzeigeeinrichtung (12), die einen Anzeigebildschirm umfasst; sowie einen Prozessor (13),
wobei der Prozessor (13) so ausgeführt ist, dass er Operationen durchführt, die einschließen:
Ausführen einer Vielzahl von Aufgaben zum Verarbeiten von Daten;
Einstellen eines Modus zur Einschränkung von Aufgaben, in dem wenigstens eine Aufgabe der Vielzahl von Aufgaben eingeschränkt ist, entsprechend einer Betätigung durch einen Benutzer der elektronischen Vorrichtung (10);
wenn der Modus zur Einschränkung von Aufgaben eingestellt ist:
Anzeigen mittels einer Betätigung durch den Benutzer der elektronischen Vorrichtung (10) eingegebener Daten an der Anzeigeeinrichtung(12);
Feststellen, ob eine Kommunikationsverbindung mit der Kommunikationsvorrichtung (20) durch die Nahfeldkommunikations-Einheit (16) hergestellt ist; und
Umschalten des Anzeigebildschirms auf einen Bildschirm, der darstellt, dass der Modus zur Einschränkung von Aufgaben eingestellt ist, über einen vorgegebenen Zeitraum, wenn festgestellt wird, dass die Kommunikationsverbindung zwischen der Nahfeldkommunikations-Einheit (16) und der Kommunikationsvorrichtung (20) hergestellt ist, sowie
Umschalten des Anzeigebildschirms und Zurückkehren zu dem Anzeigebildschirm, der angezeigt wurde, bevor die Kommunikationsverbindung zwischen der Nahfeldkommunikations-Einheit (16) und der Kommunikationsvorrichtung (20) hergestellt wurde, und Anzeigen der mittels der Betätigung durch den Benutzer der elektronischen Vorrichtung (10) eingegebenen Daten an der Anzeigeeinrichtung (12) nach Ablauf des vorgegebenen Zeitraums unter Beibehaltung des einzustellenden Modus zur Einschränkung von Aufgaben, wodurch der Benutzer der elektronischen Vorrichtung (10) in die Lage versetzt wird, weiter Daten einzugeben; und
wobei die Kommunikationsvorrichtung (20) so ausgeführt ist, dass sie in der elektronischen Vorrichtung (10) gespeicherte Daten (14f) des Modus zur Einschränkung von Aufgaben empfängt und einen Benutzer der Kommunikationsvorrichtung (20) in die Lage versetzt, auf Basis eines Bildschirms der Kommunikationsvorrichtung (20), der auf Basis der Daten (14f) des Modus zur Einschränkung von Aufgaben angezeigt wird, zu prüfen, ob der Modus zur Einschränkung von Aufgaben in der elektronischen Vorrichtung (10) eingestellt worden ist.

2. System nach Anspruch 1, wobei:
der Prozessor (13) der elektronischen Vorrichtung (10) so ausgeführt ist, dass er Operationen durchführt, die einschließen:
Feststellen, ob Kommunikation hergestellt ist, auf Basis von Annäherung der Kommunikationsvorrichtung, in dem Prozess zum Feststellen, ob Kommunikation mit der Kommunikationsvorrichtung hergestellt ist.

3. System nach Anspruch 1, wobei:
der Prozessor (13) der elektronischen Vorrichtung (10) so ausgeführt ist, dass er Operationen durchführt, die einschließen:
Aufheben des Modus zur Einschränkung von Aufgaben, wenn Daten, die Aufheben des Modus zur Einschränkung von Aufgaben anweisen, von der Kommunikationsvorrichtung (20) empfangen werden.

4. System nach Anspruch 1, wobei:
der Prozessor (13) der elektronischen Vorrichtung (10) so ausgeführt ist, dass er Operationen durchführt, die einschließen:
Halten der einzustellenden elektronischen Vorrichtung in dem Modus zur Einschränkung von Aufgaben, sofern nicht nach Übertragung der Informationen Daten empfangen werden, die auf die Aufhebung des Modus zur Einschränkung von Aufgaben hinweisen.

5. Steuerungsverfahren eines Systems, das eine elektronische Vorrichtung (10) und eine Kommunikationsvorrichtung (20) umfasst, wobei die elektronische Vorrichtung (10) eine Nahfeldkommunikations-Einheit (16), die so ausgeführt ist, dass sie drahtlose Kommunikation mit der Kommunikationsvorrichtung (20) durchführt, eine Anzeigeeinrichtung (12), die einen Anzeigebildschirm umfasst, sowie einen Prozessor (13) umfasst, wobei das Verfahren die folgenden Schritte umfasst:
Ausführen einer Vielzahl von Aufgaben zum Verarbeiten von Daten;
Einstellen eines Modus zur Einschränkung von Aufgaben, in dem wenigstens einige Aufgaben der Vielzahl von Aufgaben eingeschränkt sind, entsprechend einer Betätigung durch einen Benutzer der elektronischen Vorrichtung (10);
Anzeigen mittels einer Betätigung durch den Benutzer der elektronischen Vorrichtung (10) eingegebener Daten an der Anzeigeeinrichtung(12), wenn der Modus zur Einschränkung von Aufgaben eingestellt ist;
Feststellen, ob eine Kommunikationsverbindung mit der Kommunikationsvorrichtung (20) durch die Nahfeldkommunikations-Einheit (16) hergestellt ist; und
Umschalten des Anzeigebildschirms auf einen Bildschirm, der darstellt, dass der Modus zur Einschränkung von Aufgaben eingestellt ist, über einen vorgegebenen Zeitraum, und Anzeigen des Bildschirms, der darstellt, dass der Modus zur Einschränkung von Aufgaben eingestellt ist, wenn festgestellt wird, dass die Kommunikationsverbindung zwischen der Nahfeldkommunikations-Einheit (16) und der Kommunikationsvorrichtung (20) hergestellt ist, sowie
Umschalten des Anzeigebildschirms und Zurückkehren zu dem Anzeigebildschirm, der angezeigt wurde, bevor die Kommunikationsverbindung zwischen der Nahfeldkommunikations-Einheit (16) und der Kommunikationsvorrichtung (20) hergestellt wurde, und Anzeigen der mittels der Betätigung durch den Benutzer der elektronischen Vorrichtung (10) eingegebenen Daten an der Anzeigeeinrichtung (12) nach Ablauf des vorgegebenen Zeitraums unter Beibehaltung des einzustellenden Modus zur Einschränkung von Aufgaben, wodurch der Benutzer der elektronischen Vorrichtung (10) in die Lage versetzt wird, weiter Daten einzugeben; und
Empfangen von in der elektronischen Vorrichtung (10) gespeicherten Daten (14f) des Modus zur Einschränkung von Aufgaben durch die Kommunikationsvorrichtung (20) und Prüfen durch einen Benutzer der Kommunikationsvorrichtung (20), ob der Modus zur Einschränkung von Aufgaben in der elektronischen Vorrichtung (10) eingestellt worden ist, auf Basis eines Bildschirms der Kommunikationsvorrichtung (20), der auf Basis der Daten (14f) des Modus zur Einschränkung von Aufgaben angezeigt wird.

## Revendications

1. Système comprenant un dispositif électronique (10) et un dispositif de communication (20), le dispositif électronique (10) comprenant :
une unité de communication en champ proche (16) qui est configurée pour effectuer une communication sans fil avec le dispositif de communication (20) ;
un afficheur (12) comprenant un écran d'affichage ; et
un processeur (13),
dans lequel le processeur (13) est configuré pour effectuer des opérations comportant :
effectuer une pluralité de fonctions de traitement de données ;
définir un mode de restriction de fonction dans lequel au moins une fonction de la pluralité de fonctions est restreinte, selon une opération par un utilisateur du dispositif électronique (10) ;
pendant que le mode de restriction de fonction est défini,
afficher des données entrées par une opération par l'utilisateur du dispositif électronique (10), sur l'afficheur (12) ;
détecter si une connexion de communication avec le dispositif de communication (20) par l'unité de communication en champ proche (16) est établie ; et
s'il est détecté que la connexion de communication entre l'unité de communication en champ proche (16) et le dispositif de communication (20) est établie, pendant une période prédéterminée, commuter l'écran d'affichage vers un écran représentant que le mode de restriction de fonction est défini, et
après l'écoulement de la période prédéterminée, tout en gardant le mode de restriction de fonction à définir, commuter l'écran d'affichage et revenir à l'écran d'affichage affiché avant que la connexion de communication n'ait été établie entre l'unité de communication en champ proche (16) et le dispositif de communication (20), et afficher, sur l'afficheur (12), les données entrées par l'opération par l'utilisateur du dispositif électronique (10) permettant ainsi à l'utilisateur du dispositif électronique (10) de continuer à entrer des données ; et
dans lequel le dispositif de communication (20) est configuré pour recevoir des données de mode de restriction de fonction (14f) stockées dans le dispositif électronique (10) et permettant à un utilisateur du dispositif de communication (20) de vérifier si le mode de restriction de fonction a été défini dans le dispositif électronique (10) sur la base d'un écran du dispositif de communication (20) affiché sur la base des données de mode de restriction de fonction (14f).

2. Système selon la revendication 1, dans lequel :
le processeur (13) du dispositif électronique (10) est configuré pour effectuer des opérations comportant :
dans le processus de détection pour savoir si une communication avec le dispositif de communication est établie, détecter si une communication est établie sur la base de l'approche du dispositif de communication.

3. Système selon la revendication 1, dans lequel :
le processeur (13) du dispositif électronique (10) est configuré pour effectuer des opérations comportant :
annuler le mode de restriction de fonction lorsque des données ordonnant l'annulation du mode de restriction de fonction sont reçues du dispositif de communication (20).

4. Système selon la revendication 1, dans lequel :
le processeur (13) du dispositif électronique (10) est configuré pour effectuer des opérations comportant :
garder le dispositif électronique dans le mode de restriction de fonction à définir, à moins que des données indiquant l'annulation du mode de restriction de fonction ne soient reçues, après la transmission des informations.

5. Procédé de commande d'un système comprenant un dispositif électronique (10) et un dispositif de communication (20), le dispositif électronique (10) comportant une unité de communication en champ proche (16) configurée pour effectuer une communication sans fil avec le dispositif de communication (20), un afficheur (12) comprenant un écran d'affichage et un processeur (13), le procédé comprenant les étapes consistant à :
effectuer une pluralité de fonctions de traitement de données ;
définir un mode de restriction de fonction dans lequel certaines fonctions de la pluralité de fonctions sont restreintes, selon une opération par un utilisateur du dispositif électronique (10) ;
pendant que le mode de restriction de fonction est défini, afficher des données entrées par une opération par l'utilisateur du dispositif électronique (10), sur l'afficheur (12) ;
détecter si une connexion de communication avec le dispositif de communication (20) par l'unité de communication en champ proche (16) est établie ; et
s'il est détecté que la connexion de communication entre l'unité de communication en champ proche (16) et le dispositif de communication (20) est établie, pendant une période prédéterminée, commuter l'écran d'affichage vers un écran représentant que le mode de restriction de fonction est défini et afficher l'écran représentant que le mode de restriction de fonction est défini, et
après l'écoulement de la période prédéterminée, tout en gardant le mode de restriction de fonction à définir, commuter l'écran d'affichage et revenir à l'écran d'affichage affiché avant que la connexion de communication n'ait été établie entre l'unité de communication en champ proche (16) et le dispositif de communication (20), et afficher, sur l'afficheur (12), les données entrées par l'opération par l'utilisateur du dispositif électronique (10) permettant ainsi à l'utilisateur du dispositif électronique (10) de continuer à entrer des données ; et
recevoir des données de mode de restriction de fonction (14f) stockées dans le dispositif électronique (10) par le dispositif de communication (20) et vérifier par un utilisateur du dispositif de communication (20) si le mode de restriction de fonction a été défini dans le dispositif électronique (10) sur la base d'un écran du dispositif de communication (20) affiché sur la base des données de mode de restriction de fonction (14f).
